# EUROPÄISCHE PATENTSCHRIFT

(11) **EP 3 419 873 B1**
(45) Veröffentlichungstag und Bekanntmachung des Hinweises auf die Patenterteilung: **19.01.2022**
(21) Anmeldenummer: 17704762.8
(22) Anmeldetag: 13.02.2017
(51) Int. Cl.: B60T 8/1766, B60T 8/26

(54) **VERFAHREN ZUM BETRIEB EINER BREMSANLAGE FÜR KRAFTFAHRZEUGE UND BREMSANLAGE**
METHOD FOR OPERATING A BRAKE SYSTEM FOR MOTOR VEHICLES, AND BRAKE SYSTEM
PROCÉDÉ POUR FAIRE FONCTIONNER UN SYSTÈME DE FREINAGE POUR VÉHICULES À MOTEUR ET SYSTÈME DE FREINAGE

(30) Priorität: 23.02.2016 DE 102016202715
(43) Veröffentlichungstag der Anmeldung: 02.01.2019
(73) Patentinhaber: Continental Teves AG & Co. OHG, 60488 Frankfurt am Main (DE)
(72) Erfinder: BESIER, Marco, 65307 Bad Schwalbach (DE); ROLL, Georg, 60438 Frankfurt (DE)
(74) Vertreter: Continental Corporation
(86) Internationale Anmeldenummer: PCT/EP2017/053109
(87) Internationale Veröffentlichungsnummer: WO 2017/144294

(56) Entgegenhaltungen:
- WO-A1-2015/113679
- DE-A1-102012 212 329
- US-A1- 2004 135 432
- US-A1- 2013 253 793

## Beschreibung

Die Erfindung betrifft ein Verfahren zum Betrieb einer Bremsanlage gemäß dem Oberbegriff von Anspruch 1 sowie eine Bremsanlage gemäß dem Oberbegriff von Anspruch 11.

Es sind Kraftfahrzeuge bekannt, die eine hydraulische Betriebsbremsanlage für Vorder- und Hinterachse und eine mittels eines EPB-Bedientasters durch den Fahrer aktivierbare Parkbremsanlage mit elektromechanischen Parkbremsen (EPB) an den Rädern der Hinterachse umfassen. Auch ist eine Notfallbremsfunktion in derartigen Bremsanalgen bekannt, die bewirkt dass, wenn während der Fahrt der EPB-Bedientaster vom Fahrer aktiviert wird, eine hydraulische Bremsung mittels der Betriebsbremsanlage ausgelöst wird, um das Fahrzeug mit einer voreingestellten Verzögerung zu bremsen. Diese Funktion ist auch als dynamische Bremsfunktion (DBF) bekannt. Ist die (hydraulische) dynamische Bremsfunktion (DBF) nicht verfügbar, kann als Rückfallebene die Aktuator dynamische Bremsfunktion (ADBF) genutzt werden, bei welcher die elektrischen Parkbremsen (EPBs) an der Hinterachse für eine Bremsung während der Fahrt genutzt werden. Bei diesem bekannten Betriebsverfahren rollt die Vorderachse frei, d.h. ist ungebremst, und die Hinterachse wird mit den elektrischen Parkbremsen gebremst. Die bekannte ADBF wird vom Fahrer durch Betätigung des EPB-Bedientasters lediglich digital aktiviert oder deaktiviert, d.h. dass eine analog dosierbare Bereitstellung der Zuspannkräfte nicht vorgesehen ist. Bei einem entsprechenden Bedienkommando werden die elektrischen Antriebe der elektromechanischen Parkbremsen so lange in Zuspannrichtung bestromt, bis eine Blockierneigung der EPB-gebremsten Räder zu erkennen ist. Dann wird die Bestromung so lange umgekehrt, bis die Blockiertendenz nicht mehr besteht, um danach wieder zuzuspannen und diesen Vorgang zyklisch zu wiederholen. Somit werden die Hinterräder mittels der elektrischen Parkbremsen an ihrer Stabilitätsgrenze, d.h. mit der maximal erzielbaren Verzögerungswirkung, gebremst. Dieses Verfahren basiert demnach auf Regelalgorithmen, die auf den Schlupf der EPB-gebremsten Räder reagieren. Dabei wird der Schlupf dadurch bestimmt, dass die aktuelle, gemessene Raddrehzahl mit einer Referenzdrehzahl verglichen wird, die proportional zur Fahrzeuggeschwindigkeit ist (sog. (Fahrzeug)Referenzgeschwindigkeit). Die bekannte ADBF nutzt zur Bildung der Fahrzeugreferenzgeschwindigkeit (nur) die gemessenen Raddrehzahlinformationen der Vorderräder, da diese während des Abbremsens mit ADBF frei rollen und somit selbst keinen Schlupf aufweisen.

Aus der Die DE 10 2012 212329 A1 ist ein Verfahren zum Sicherstellen einer Bremswirkung bekannt. Wenn eine Verzögerungsanforderung eingeht, wird zunächst die Betriebsbremse aktiviert. Falls eine Verzögerungsgröße unterhalb eines Sollwerts festgestellt wird und der gemessene Schlupf einen Schlupfschwellenwert unterschreitet, dann wird eine mit Fremdkraft betriebene Feststellbremsanlage aktiviert, um das Fahrzeug zum Stehen zu bringen.

Es ist Aufgabe der vorliegenden Erfindung, ein Verfahren zum Betrieb einer eingangs genannten Bremsanlage für Kraftfahrzeuge sowie eine derartige Bremsanlage bereitzustellen, welches/welche ohne Benutzung von gemessenen Raddrehzahlen der Räder die Sicherheit bei Bremsungen des Kraftfahrzeugs erhöht, insbesondere in Fällen in welchen die hydraulische Betriebsbremsvorrichtung teilweise ausgefallen ist oder nur in einer, z.B. unverstärkten, hydraulischen Rückfallebenenbetriebsart betrieben werden kann.

Eine weitere Aufgabe der vorliegenden Erfindung ist es, ein Verfahren zum Betrieb einer Bremsanlage sowie eine Bremsanlage bereitzustellen, welches zu einer verbesserten Bremswirkung führt und dabei insbesondere die Fahrzeugstabilität erhält.

Die Aufgabe wird erfindungsgemäß durch ein Verfahren gemäß Anspruch 1 und eine Bremsanlage gemäß Anspruch 11 gelöst.

Die Erfindung geht von einer Bremsanlage eines Kraftfahrzeugs mit einer hydraulischen Betriebsbremsvorrichtung mit hydraulisch betätigbaren Radbremsen an zumindest einer Vorderachse des Kraftfahrzeugs, und mit einer Parkbremsvorrichtung mit jeweils durch einen elektromechanischen Aktuator betätigbaren Radbremsen an einer Hinterachse des Kraftfahrzeugs aus. Der Erfindung liegt der Gedanke zugrunde, dass während einer Bremsung mittels der hydraulischen Betriebsbremsvorrichtung während einer Fahrt des Kraftfahrzeugs, eine Bremsung mittels der Parkbremsvorrichtung durchgeführt wird. Es wird also während einer Fahrt zeitlich parallel zu einer Bremsung an zumindest den Rädern der Vorderachse mittels der hydraulischen Betriebsbremsvorrichtung, eine Bremsung mittels der Parkbremsvorrichtung an den Rädern der Hinterachse durchgeführt. Dabei werden eine Ist-Längsverzögerung des Kraftfahrzeugs (sog. Kraftfahrzeug-Ist-Längsverzögerung) gemessen, eine zu erreichende Soll-Längsverzögerung des Kraftfahrzeugs (sog. Kraftfahrzeug-Soll-Längsverzögerung) bestimmt und die elektromechanischen Aktuatoren der Parkbremsvorrichtung derart angesteuert, dass die gemessene Kraftfahrzeug-Ist-Längsverzögerung auf die ermittelte Kraftfahrzeug-Soll-Längsverzögerung geregelt wird. Hierdurch wird eine verbesserte Bremswirkung erzielt, ohne dass die Raddrehzahlen der Räder benötigt werden.

Bevorzugt wird die Kraftfahrzeug-Soll-Längsverzögerung anhand eines Bremsdrucks der Betriebsbremsvorrichtung bestimmt. Besonders bevorzugt handelt es sich um einen Radbremsdrucks der hydraulisch betätigbaren Radbremsen der Betriebsbremsvorrichtung. So wird die Bremswirkung der Betriebsbremsvorrichtung, insbesondere an der Vorderachse, für die Bremsung mittels der Parkbremsvorrichtung an der Hinterachse adäquat berücksichtigt. Besonders bevorzugt wird die Kraftfahrzeug-Soll-Längsverzögerung zusätzlich anhand einer gemessenen Querbeschleunigung des Kraftfahrzeugs bestimmt. So kann eine Kurvenfahrt berücksichtigt werden, um eine stabile Seitenführung der Hinterachse auch bei Kurvenfahrt zu erhalten.

Gemäß einer Weiterbildung der Erfindung wird die Kraftfahrzeug-Soll-Längsverzögerung aus einem ersten Kraftfahrzeug-Längsverzögerungsanteil und einem zweiten Kraftfahrzeug-Längsverzögerungsanteil berechnet. Vorteilhafterweise geben der erste Kraftfahrzeug-Längsverzögerungsanteil den Anteil der Vorderachse an der Kraftfahrzeug-Längsverzögerung und der zweite Kraftfahrzeug-Längsverzögerungsanteil den Anteil der Hinterachse an der Kraftfahrzeug-Längsverzögerung an. Die Kraftfahrzeug-Soll-Längsverzögerung wird vorteilhafterweise einfach durch Addition aus dem ersten Kraftfahrzeug-Längsverzögerungsanteil und dem zweiten Kraftfahrzeug-Längsverzögerungsanteil berechnet.

Der erste Kraftfahrzeug-Längsverzögerungsanteil wird bevorzugt aus einem Radbremsdruck der hydraulisch betätigbaren Radbremsen der Betriebsbremsvorrichtung bestimmt. Besonders bevorzugt wird der erste Kraftfahrzeug-Längsverzögerungsanteil anhand eines ersten vorgegebenen Zusammenhangs aus dem Radbremsdruck berechnet. Der erste vorgegebene Zusammenhang wird vorteilhafterweise einfach durch eine erste Kennlinie vorgegeben, die z.B. in einer elektronischen Steuer- und Regeleinheit der Bremsanlage abgelegt ist. So kann aus dem Radbremsdruck mittels des ersten vorgegebenen Zusammenhangs direkt der erste Kraftfahrzeug-Längsverzögerungsanteil berechnet werden.

Bei ungeregelten Bremsungen ist der Radbremsdruck in den beiden Radbremsen der Vorderachse gleich und entspricht dem von einer Druckbereitstellungseinrichtung der hydraulischen Betriebsbremsvorrichtung bereitgestellten (System)Bremsdruck.

Der zweite Kraftfahrzeug-Längsverzögerungsanteil wird bevorzugt in Abhängigkeit einer gemessenen Querbeschleunigung des Kraftfahrzeugs bestimmt. So kann eine Kurvenfahrt berücksichtigt werden, um eine stabile Seitenführung der Hinterachse auch bei Kurvenfahrt zu erhalten.

Bevorzugt wird der zweite Kraftfahrzeug-Längsverzögerungsanteil aus einem dritten Kraftfahrzeug-Längsverzögerungsanteil und einem vorgegebenen oder vorbestimmten Sicherheits-Verzögerungswert berechnet. Vorteilhafterweise ergibt sich der zweite Kraftfahrzeug-Längsverzögerungsanteil aus dem dritten Kraftfahrzeug-Längsverzögerungsanteil durch Subtraktion des Sicherheits-Verzögerungswerts.

Zur einfachen Berücksichtigung von Kurvenfahrten, ist bevorzugt der Sicherheits-Verzögerungswert in Abhängigkeit der gemessenen Querbeschleunigung des Kraftfahrzeugs vorgegeben, oder wird der Sicherheits-Verzögerungswert bevorzugt in Abhängigkeit der gemessenen Querbeschleunigung des Kraftfahrzeugs bestimmt. Im letzteren Fall wird der Sicherheits-Verzögerungswert vorteilhafterweise anhand eines dritten vorgegebenen Zusammenhangs aus der gemessenen Querbeschleunigung bestimmt.

Der dritte Kraftfahrzeug-Längsverzögerungsanteil wird bevorzugt anhand eines zweiten vorgegebenen Zusammenhangs aus dem ersten Kraftfahrzeug-Längsverzögerungsanteil ermittelt. So wird die Bremswirkung der Betriebsbremsvorrichtung für die Dimensionierung der Bremswirkung der Parkbremsvorrichtung an der Hinterachse berücksichtigt. Der zweite vorgegebene Zusammenhang wird vorteilhafterweise einfach durch eine zweite Kennlinie oder Kennfeld vorgegeben, die z.B. in einer elektronischen Steuer- und Regeleinheit der Bremsanlage abgelegt ist. Der zweite vorgegebene Zusammenhang berücksichtigt vorteilhafterweise eine dynamische Achslastverteilung des Kraftfahrzeugs. Hier gehen unter anderem die Fahrzeuggeometrie und die Schwerpunktlage des spezifischen Kraftfahrzeugs ein. Der dritte Kraftfahrzeug-Längsverzögerungsanteil stellt somit einen maximal zulässigen Verzögerungsanteil der Hinterachse dar, um das Kraftfahrzeug ohne Stabilitätsverlust möglichst schnell abzubremsen.

Zur Vermeidung eines Blockierens der Räder (Vorder- und/oder Hinterräder) wird erfindungsgemäß ein zeitlicher Verlauf oder eine zeitliche Änderung der Kraftfahrzeug-Ist-Längsverzögerung und der zeitliche Verlauf oder eine zeitliche Änderung des Radbremsdrucks der hydraulisch betätigbaren Radbremsen der Vorderachse beobachtet. Anhand der Beobachtung kann auf ein Blockieren zumindest eines der Räder geschlossen werden. Insbesondere soll ein Rückgang oder Stagnieren der Kraftfahrzeug-Ist-Längsverzögerung erkannt werden. Besonders bevorzugt werden zur Beobachtung der Kraftfahrzeug-Ist-Längsverzögerung unterschiedlich stark gefilterte Messgrößen bzw. Kraftfahrzeug-Ist-Längsverzögerungs-Messwerte verwendet. Da durch eine stärkere Filterung auch ein größerer Zeitverzug des Signals entsteht, bietet dies die Möglichkeit, dass bei einem Rückgang der Kraftfahrzeug-Ist-Längsverzögerung ein Schnittpunkt von einem starken und weniger stark gefilterten Signal entsteht. Anhand dieses Schnittpunkts der Signale und der Beobachtung des Signalverlaufs kann darauf geschlossen werden, dass die Vorderräder in diesem Moment bzw. kurz vorher begonnen haben, zu blockieren bzw. sich ein zu großer Schlupf eingestellt hat.

Anhand der Beobachtung der genannten Größen kann ein Blockieren zumindest eines der Räder erkannt werden. Bevorzugt wird dann ein Druckabbau an den Radbremsen der Betriebsbremsvorrichtung durchgeführt. Der Druckabbau wird hierbei, ähnlich wie in einer ABS-Regelung üblich, mit dem Ziel durchgeführt, dass die Räder wieder in einen stabilen Schlupfbereich kommen und somit zum einen wieder mehr Längskraft absetzen können und außerdem auch wieder Seitenführungskraft übertragen können. Somit kann eine höhere Verzögerung erzielt werden und das Fahrzeug bleibt lenkbar.

Zur Stabilitätsüberwachung wird bevorzugt anhand einer Querbeschleunigung des Kraftfahrzeugs, einer Gierrate des Kraftfahrzeugs und einer Fahrzeuggeschwindigkeit eine Schwimmwinkeländerung des Kraftfahrzeugs bestimmt. Wenn die bestimmte Schwimmwinkeländerung einen Grenzwert übersteigt, wird die Zuspannkraft an den elektromechanischen Aktuatoren der Parkbremsvorrichtung verringert. Alternativ wird die Kraftfahrzeug-Soll-Längsverzögerung oder speziell der zweite Kraftfahrzeug-Längsverzögerungsanteil verringert.

Bevorzugt wird das erfindungsgemäße Verfahren während des automatisierten Fahrens durchgeführt.

Bevorzugt wird das erfindungsgemäße Verfahren durchgeführt, wenn eine Bremsung mittels eines Primärbremssystems der hydraulischen Betriebsbremsvorrichtung nicht möglich ist, und die Bremsung mittels eines Sekundärbremssystems der hydraulischen Betriebsbremsvorrichtung an zumindest der Vorderachse durchgeführt wird. Besonders bevorzugt umfasst das Primärbremssystem der hydraulischen Betriebsbremsvorrichtung eine elektrisch ansteuerbare, erste Druckbereitstellungseinrichtung, mit welcher die hydraulisch betätigbaren Radbremsen der Vorder- und Hinterachse betätigbar sind. Besonders bevorzugt umfasst das Sekundärbremssystem der hydraulischen Betriebsbremsvorrichtung eine elektrisch ansteuerbare, zweite Druckbereitstellungseinrichtung, mit welcher zumindest die hydraulisch betätigbaren Radbremsen der Vorderachse betätigbar sind.

Gemäß einer bevorzugten Ausführungsform des erfindungsgemäßen Verfahrens wird eine im zeitlichen Mittel analoge und stufenlose Bremskrafterzeugung an der Hinterachse mit Hilfe der elektrischen Parkbremsaktuatoren durchgeführt.

Die Erfindung bietet weiterhin den Vorteil, dass das Verfahren mit an sich bekannten elektrischen Parkbremsen bzw. elektromechanischen Aktuatoren einer Parkbremsvorrichtung, welche üblicherweise keine Sensorik (wie Kraft-, Weg- oder Winkelsensoren) aufweisen, durchführbar ist, da die Ansteuerung der Parkbremsvorrichtung anhand der gemessenen Kraftfahrzeuglängsverzögerung, und ggf. einem, in Bremsanlagen üblicherweise sowieso bestimmten Bremsdruck der hydraulischen Betriebsbremsvorrichtung, durchgeführt wird.

Die Erfindung betrifft auch eine Bremsanlage für ein Kraftfahrzeug mit einer hydraulischen Betriebsbremsvorrichtung mit hydraulisch betätigbaren Radbremsen an zumindest einer Vorderachse, einer Parkbremsvorrichtung mit jeweils durch einen elektromechanischen Aktuator betätigbaren Radbremsen an einer Hinterachse und einer elektronischen Steuer- und Regeleinheit, wobei in der elektronischen Steuer- und Regeleinheit ein erfindungsgemäßes Verfahren durchgeführt wird. Die Bremsanlage umfasst eine Beschleunigungserfassungsvorrichtung, welche zumindest eine Längsverzögerung des Kraftfahrzeugs erfasst, oder erhält Messdaten einer solchen Beschleunigungserfassungsvorrichtung. Hierzu kann die Bremsanlage mit der Beschleunigungserfassungsvorrichtung verbunden sein oder deren Messdaten über ein Bussystem, z.B. von einem anderen Steuergerät, erhalten.

Bevorzugt handelt es sich um eine Bremsanlage, die in einer "Brake-by-wire"-Betriebsart sowohl vom Fahrzeugführer als auch unabhängig vom Fahrzeugführer ansteuerbar ist, und in einer hydraulischen Rückfallbetriebsart nur vom Fahrzeugführer betrieben werden kann.

Bevorzugt erfasst die Beschleunigungserfassungsvorrichtung weiterhin eine Querbeschleunigung des Kraftfahrzeugs, oder die Bremsanlage umfasst eine weitere Beschleunigungserfassungsvorrichtung, welche eine Querbeschleunigung des Kraftfahrzeugs erfasst, oder ist mit einer solchen weiteren Beschleunigungserfassungsvorrichtung verbunden.

Bevorzugt umfasst die hydraulische Betriebsbremsvorrichtung der Bremsanlage ein Primärbremssystem und ein Sekundärbremssystem. Besonders bevorzugt umfasst das Primärbremssystem der hydraulischen Betriebsbremsvorrichtung eine elektrisch ansteuerbare, erste Druckbereitstellungseinrichtung, mit welcher die hydraulisch betätigbaren Radbremsen der Vorder- und Hinterachse betätigbar sind. Besonders bevorzugt umfasst das Sekundärbremssystem der hydraulischen Betriebsbremsvorrichtung eine elektrisch ansteuerbare, zweite Druckbereitstellungseinrichtung, mit welcher zumindest die hydraulisch betätigbaren Radbremsen der Vorderachse betätigbar sind.

Weitere bevorzugte Ausführungsformen der Erfindung ergeben sich aus den Ansprüchen und der nachfolgenden Beschreibung anhand einer Figur.

Es zeigt schematisch:

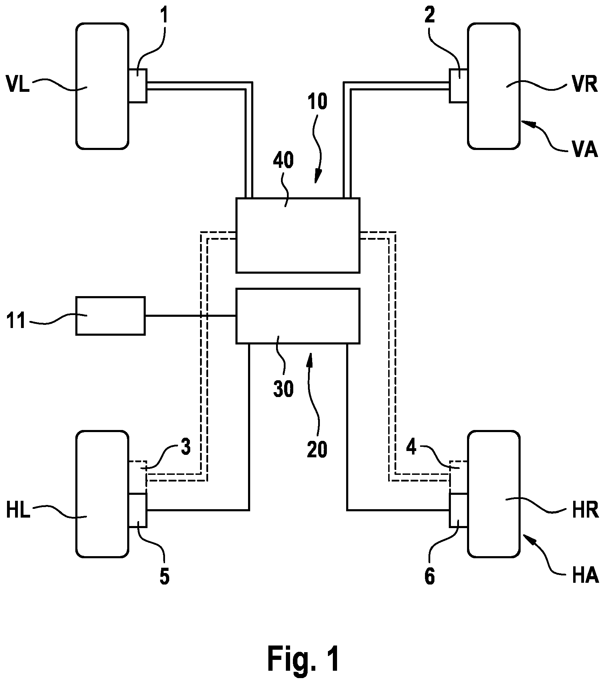

- Fig. 1: eine beispielsgemäße Bremsanlage zur Durchführung eines erfindungsgemäßen Verfahrens.

In Fig. 1 ist eine beispielsgemäße Bremsanlage eines Kraftfahrzeugs zur Durchführung eines erfindungsgemäßen Verfahrens stark schematisch dargestellt. Das Kraftfahrzeug umfasst eine Vorderachse VA mit einem linken Vorderrad VL und einem rechten Vorderrad VR und eine Hinterachse HA mit einem linken Hinterrad HL und einem rechten Hinterrad HR. Die Bremsanlage umfasst eine hydraulische Betriebsbremsvorrichtung 10 sowie eine elektrische Parkbremsvorrichtung 20.

Betriebsbremsvorrichtung 10 umfasst hydraulisch betätigbare Radbremsen zumindest für die Vorderachse VA. Beispielsgemäß ist eine hydraulisch betätigbare Radbremse 1 für das linke Vorderrad VL und eine hydraulisch betätigbare Radbremse 2 für das rechte Vorderrad VR vorgesehen. Optional kann eine hydraulisch betätigbare Radbremse 3 für das linke Hinterrad HL und eine hydraulisch betätigbare Radbremse 4 für das rechte Hinterrad HR vorgesehen sein, was durch die gestrichelten Verbindungen angedeutet ist. Betriebsbremsvorrichtung 10 umfasst weiterhin eine hydraulische Steuer- und Regeleinheit 40, welche z.B. einen bremspedalbetätigbaren Hauptbremszylinder, eine elektrisch steurbare Druckquelle für eine "Brake-by-wire"-Betriebsart, ein mit dem Hauptbremszylinder zusammenwirkende Simulationseinrichtung zur Erzeugung eines Bremspedalgefühls in der "Brake-by-wire"-Betriebsart, und elektrisch betätigbare Ventile, z.B. Druckregelventile zum Einstellen von Radbremsdrücken an den Radbremsen 1-4, umfassen kann.

Parkbremsvorrichtung 20 umfasst elektrisch betätigbare Radbremsen für die Hinterachse HA. Beispielsgemäß ist eine Radbremse 5 für das linken Hinterrad HL und eine Radbremse 6 für das rechte Hinterrad HR vorgesehen. Jede der elektrisch betätigbaren Radbremsen umfasst einen nicht näher dargestellten elektromechanischen Aktuator, durch welche sie betätigt wird.

Die Radbremsen 5, 6 der Parkbremsvorrichtung 20 können auch mit den hydraulischen Radbremsen 3, 4 der Hinterachse der Betriebsbremsvorrichtung in einer Einheit kombiniert sein, z.B. sog. elektromechanisch angetriebene Kombi-Bremssättel. An sich sind elektrische Parkbremsen (EPBs) bekannt, die auf die Betriebsbremse wirken, um eine geeignet Bremswirkung, insbesondere für die Parkbremsfunktion, zu erzeugen. Bei einem elektromechanisch angetriebenen Kombi-Bremssattel wird beispielsweise durch einen Elektromotor über ein primäres Getriebe (meist ein Rotations-Rotations-Getriebe) ein Rotations-Translations-Getriebe (z.B. ein Spindelantrieb oder Kugelgewindetrieb) angetrieben, welches eine Axialkraft auf den Bremskolben im Bremssattel ausübt. Mit dieser Kraft auf den Bremskolben werden die Bremsbeläge des Bremssattels an die Bremsscheibe gedrückt und erzeugen somit eine Spannkraft.

Weiterhin umfasst die Bremsanlage eine elektronische Steuer- und Regeleinheit 30. Diese dient zur Ansteuerung der elektrisch ansteuerbaren Komponenten der hydraulischen Betriebsbremsvorrichtung 10 und der Parkbremsvorrichtung 20.

Es ist eine Beschleunigungserfassungsvorrichtung 11 vorgesehen, welche beispielsgemäß die Längsverzögerung (bzw. Längsbeschleunigung) a_{Fzg,ist} und die Querbeschleunigung a_{Quer,ist} des Kraftfahrzeugs misst. Beispielsgemäß ist die Beschleunigungserfassungsvorrichtung 11 mit der elektronischen Steuer- und Regeleinheit 30 verbunden, so dass der elektronischen Steuer- und Regeleinheit 30 die Messdaten a_{Fzg,ist}, a_{Quer,ist} der Beschleunigungserfassungsvorrichtung vorliegen und zur Durchführung eines erfindungsgemäßen Verfahrens ausgewertet werden können.

Beispielsgemäß wird während einer Fahrt des Kraftfahrzeugs zeitlich parallel zu einer Bremsung mittels der hydraulischen Betriebsbremsvorrichtung 10 an zumindest der Vorderachse VA, eine Bremsung mittels der Parkbremsvorrichtung 20 an der Hinterachse durchgeführt. Hierzu wird eine zu erreichende Kraftfahrzeug-Längsverzögerung (sog. Kraftfahrzeug-Soll-Längsverzögerung) a_{Fzg},ₛₒₗₗ bestimmt. Die elektromechanischen Aktuatoren der Radbremsen 5, 6 der Parkbremsvorrichtung 20 werden dann derart angesteuert, dass die mittels der Beschleunigungserfassungsvorrichtung 11 gemessene Kraftfahrzeug-Ist-Längsverzögerung a_{Fzg,ist} auf die bestimmte Kraftfahrzeug-Soll-Längsverzögerung a_{Fzg,soll} geregelt wird.

Das beispielsgemäße Betriebsverfahren für die elektrischen Parkbremsen (EPB) 5, 6 während einer dynamischen Bremsung ist dafür geeignet, parallel zu einer ebenfalls gebremsten Vorderachse VA genutzt zu werden. Dies ermöglicht die Nutzung der EPBs 5, 6, um beispielsweise parallel zu einer hydraulisch gebremsten Vorderachse VA eine Bremsung der Hinterachse HA zu realisieren.

Ebenfalls ist das beispielsgemäße Betriebsverfahren für elektrische Parkbremsen 5, 6 geeignet, um eine hydraulische Bremsung, die auf beide Achsen VA, HA (Vorder- und Hinterachse) wirkt, zu unterstützen. Dies wird beispielsweise genutzt, um eine unverstärkte, fahrerbetätigte Bremsung mittels der hydraulischen Betriebsbremsvorrichtung 10 zu unterstützen und somit die gesamte Bremswirkung bei gleicher Betätigungsarbeit des Fahrers zu erhöhen.

In beiden Fällen wird während einer dynamischen Bremsung eine Bremsung der Hinterachse HA mittels der elektrischen Parkbremsen 5, 6 auf Basis von Kraftfahrzeug-Längsverzögerungen a_{Fzg,ist}, und ggf. Kraftfahrzeug-Querbeschleunigungen a_{Quer,ist}, realisiert, und dies ohne Nutzung von Raddrehzahlinformationen. Dies ist eine Unterstützung oder parallele Nutzung der elektrischen Parkbremsen 5, 6 zu einer hydraulischen Bremsung während der Fahrt.

Um parallel zu einer hydraulisch gebremsten Vorderachse eine Bremsung der Hinterachse zu realisieren, arbeitet das Betriebsverfahren beispielsgemäß mit einer geeigneten Auswertung der Längsbeschleunigungsinformation, und ggf. der Querbeschleunigungsinformation, und einer geeigneten Ansteuerung der EPB-Aktuatoren. Dies ermöglicht vorteilhafterweise eine analoge und stufenlose Erzeugung einer Hinterachsbremskraft proportional zur Vorderachsbremskraft.

Das Verfahren bietet den Vorteil, dass es mit an sich bekannten elektrischen Parkbremsen durchführbar ist. An sich bekannte elektromechanische EPB-Aktuatoren haben üblicherweise keine Sensorik, wie beispielsweise Kraft-, Weg- oder Winkelsensoren, da dies für einen Betrieb als elektrische Feststellbremse im Stand, für den diese Aktuatoren konzipiert sind, ausreichend ist. Für eine Nutzung elektrischer Parkbremsaktuatoren während der Fahrt wäre eine Erfassung der aktuellen Bremskraft bzw. Spannkraft erforderlich, wenn die Bremswirkung per Stellsignal analog (im Sinne von stufenlos) und reproduzierbar einstellbar sein soll. Aus Kostengründen wird dies jedoch nicht umgesetzt. Um eine Nutzung der EPB-Aktuatoren für eine dynamische Bremsung während der Fahrt zu ermöglichen, könnten die Raddrehzahlinformationen genutzt werden. Die Raddrehzahlinformationen sind jedoch nicht immer verfügbar, z.B. wenn die Raddrehzahlsensoren ausfallen oder durch die Konzeption der Bremssystem- bzw. Rückfallebenenarchitektur nicht in jeder Betriebssituation zur Verfügung stehen. Hier kann das beispielsgemäße Betriebsverfahren für elektrische Parkbremsen während einer dynamischen Bremsung auf Basis von Beschleunigungsinformationen genutzt werden. Diese Beschleunigungsinformationen können aus der üblicherweise bereits verbauten oder ggf. zusätzlich verbauten Sensorik, z.B. Steuergerät intern oder via BUS-Kommunikation, bezogen werden.

Ein beispielsgemäßes Verfahren zum Betrieb einer Bremsanlage mit einer hydraulischen Betriebsbremsvorrichtung 10 mit hydraulisch betätigbaren Radbremsen 1, 2 an zumindest der Vorderachse VA und einer Parkbremsvorrichtung 20 mit jeweils durch einen elektromechanischen Aktuator betätigbaren Radbremsen 5, 6 an der Hinterachse HA wird folgendermaßen durchgeführt:
Wenn die Vorderachse VA durch Aufbau eines Radbremsdrucks p_{VA} hydraulisch gebremst wird, stellt sich zunächst eine entsprechende Fahrzeugverzögerung a_{Fzg,ist} ein. Beispielsgemäß werden die Hinterräder HR, HL mit Hilfe der Radbremsen 5, 6 proportional zur Vorderachse VA gebremst auf Basis der Längsbeschleunigungsinformation (a_{Fzg,ist}) und des oder der Vorderrad-Bremsdrücke.

Hierzu wird die entsprechende Fahrzeugverzögerung a_{VA} (sog. erster Kraftfahrzeug-Längsverzögerungsanteil) zum eingestellten Vorderachsbremsdruck p_{VA} ermittelt. D.h. es wird aus dem Vorderachsbremsdruck p_{VA} mit Hilfe eines vorgegebenen Zusammenhangs, z.B. einer Formel, ein ("theoretischer") Längsverzögerungsanteil der VA berechnet.

Auf Basis der für das Kraftfahrzeug bekannten Fahrzeuggeometrie und Schwerpunktlage wird ein zulässiger Verzögerungsanteil a_{HAtheo} der Hinterachse HA (sog. dritter Kraftfahrzeug-Längsverzögerungsanteil) ermittelt, wobei der berechnete Längsverzögerungsanteil a_{VA} der Vorderachse VA eingeht. Hierzu ist vorteilhafterweise ein Formel für den Verzögerungsanteil a_{HAtheo} der Hinterachse HA vorgegeben. D.h. es wird ermittelt, welche Bremskraft die Hinterachse HA gemäß der dynamischen Achslastverlagerung noch spurstabil auf den Untergrund absetzten kann, also ohne Stabilitätsverlust des Fahrzeugs.

Der ermittelte, mögliche Verzögerungsanteil a_{HAtheo} der Hinterachse HA wird abzüglich einer Sicherheitsreserve Δa als Zielverzögerung a_{HA} für die Hinterachse HA (sog. zweiter Kraftfahrzeug-Längsverzögerungsanteil) verwendet.

Die Hinterachszielverzögerung a_{HA} wird zum bereits mittels der Vorderachsbremsdrücke p_{VA} ermittelten Vorderachsverzögerungsanteil a_{VA} addiert (a_{Fzg},ₛₒₗₗ = a_{VA} + a_{HA}). Diese gesamte Fahrzeugzielverzögerung (Kraftfahrzeug-Soll-Längsverzögerung a_{Fzg,soll}) wird nun mit der gemessenen Längsbeschleunigung des Fahrzeugs a_{Fzg},ᵢₛₜ verglichen und dient als Regelabweichung zur Ansteuerung der elektrischen Parkbremsaktuatoren an der Hinterachse HA.

Beispielsgemäß wird nun also die Hinterachsbremskraft solange erhöht, bis die gemessene Fahrzeuglängsbeschleunigung a_{Fzg,ist} die ermittelte Fahrzeugzielverzögerung a_{Fzg},ₛₒₗₗ erreicht hat. Hierzu werden entsprechend die elektrischen Parkbremsaktuatoren solange zugespannt und erhöhen somit ihre Spannkraft, bis die gewünschte Fahrzeugzielverzögerung a_{Fzg,soll} erreicht ist. Bei Verringerung der Bremsvorgabe (z.B. durch den Fahrer oder einen Autopiloten) werden die Parkbremsaktuatoren entsprechend soweit wieder gelöst, bis die gewünschte Fahrzeugzielverzögerung a_{Fzg},ₛₒₗₗ erreicht ist.

Es wird also beispielsgemäß durch entsprechendes Zuspannen und Lösen der Parkbremsaktuatoren die Regelabweichung zwischen ermittelter Fahrzeugzielverzögerung a_{Fzg},ₛₒₗₗ und gemessener Fahrzeugverzögerung a_{Fzg,ist} ausgeregelt. Somit wird die Hinterachse HA proportional zur Vorderachse VA mitgebremst und durch die geeignet ermittelte Hinterachszielverzögerung a_{HA} eine Instabilität des Fahrzeugs vermieden.

Da die Hinterachszielverzögerung a_{HA} auf Basis der dynamischen Achslastverlagerung abzüglich einer Sicherheitsreserve Δa ermittelt wurde, ist bei Bremsvorgaben, die die mögliche Verzögerung bzw. Bremskraft auf dem aktuellen Fahrbahnreibwert überschreiten, die Blockierreihenfolge sichergestellt, d.h. dass die Vorderachse VA vor der Hinterachse HA blockiert.

Um ein Blockieren der Räder möglichst zu vermeiden, wird beispielsgemäß außerdem auf Basis der Fahrzeuglängsbeschleunigung a_{Fzg},ᵢₛₜ versucht, ein Blockieren der Räder zu erkennen. Hierzu wird beispielsgemäß beobachtet, ob die Fahrzeuglängsbeschleunigung a_{Fzg,ist} trotz steigender Bremsvorgabe nicht weiter ansteigt, also konstant bleibt oder sogar wieder abnimmt, obwohl der Bremsdruck nicht verringert wurde. Dies deutet auf ein Blockieren der Räder hin. Nach dieser Erkennung wird der Bremsdruck p_{VA} entsprechend einem ABS-Zyklus ähnlichen Druckprofil moduliert, es wird also ein geeigneter Druckbetrag abgebaut und nach kurzer Zeit wieder ein Anteil des Druckbetrags aufgebaut.

Zur Vermeidung eines Blockierens der Räder werden z.B. ein zeitlicher Verlauf oder eine zeitliche Änderung der Kraftfahrzeug-Ist-Längsverzögerung und der zeitliche Verlauf der Radbremsdrücke der hydraulisch betätigbaren Radbremsen der Vorderachse VA beobachtet. Anhand der Beobachtung kann auf ein Blockieren zumindest eines der Räder geschlossen werden. Hierbei soll ein Rückgang oder Stagnieren der Kraftfahrzeug-Ist-Längsverzögerung erkannt werden. Solange der Bremsdruck an den Vorderrädern größer wird, erhöht sich auch entsprechend die Kraftfahrzeug-Ist-Längsverzögerung. Wenn zumindest eines der Vorderräder blockiert, stagniert die Kraftfahrzeug-Ist-Längsverzögerung oder sinkt wieder ab, da blockierende Räder gemäß bekannten Kraftschlussbeiwertkurven von Reifen nach Überschreiten eines Kraftschlussmaximums, welches je nach Reifen und Fahrbahn ungefähr bei 10-15% Schlupf liegt, deutlich weniger Kraft übertragen können. D.h. blockierte Räder bzw. Räder, die starken Bremsschlupf aufweisen, übertragen weniger Bremskraft auf die Straße, als wenn das Rad sich noch im stabilen Schlupfbereich befindet. Vorteilhafterweise werden zur Beobachtung der Kraftfahrzeug-Ist-Längsverzögerung unterschiedlich stark gefilterte Messgrößen bzw. Kraftfahrzeug-Ist-Längsverzögerung-Messwerte verwendet. Da durch eine stärkere Filterung auch ein größerer Zeitverzug des Signals entsteht, bietet dies die Möglichkeit, dass bei einem Rückgang der Kraftfahrzeug-Ist-Längsverzögerung ein Schnittpunkt von einem starken und weniger stark gefilterten Signal entsteht. Anhand dieses Schnittpunkts der Signale und der Beobachtung des Signalverlaufs kann darauf geschlossen werden, dass die Vorderräder in diesem Moment bzw. kurz vorher begonnen haben zu blockieren bzw. sich ein zu großer Schlupf eingestellt hat. Anhand dieser Beobachtung der genannten Größen kann ein Blockieren zumindest eines der Räder erkannt werden. Beispielsgemäß wird dann ein Druckabbau an den Radbremsen der Betriebsbremsvorrichtung durchgeführt. Der Druckabbau wird hierbei, ähnlich wie in einer ABS-Regelung üblich, mit dem Ziel durchgeführt, dass die Räder wieder in einen stabilen Schlupfbereich kommen und somit zum einen wieder mehr Längskraft absetzen können und außerdem auch wieder Seitenführungskraft übertragen können. Somit kann eine höhere Verzögerung erzielt werden und das Fahrzeug bleibt lenkbar.

Bei Kurvenfahrt wird beispielsgemäß außerdem auf Basis der Fahrzeug-Querbeschleunigung a_{Quer,ist} die Zielverzögerung a_{HA} der Hinterachse HA weiter reduziert, um eine erhöhte und somit geeignete Sicherheitsreserve zur stabilen Seitenführung der Hinterachse HA bei Kurvenfahrt zu erhalten.

Des Weiteren wird beispielsgemäß durch Nutzung von Querbeschleunigungs-, Gierraten- und Fahrzeuggeschwindigkeitsinformation eine Stabilitätsüberwachung durchgeführt. Hierzu werden die genannten Informationen in Relation gesetzt, um eine zu starke Schwimmwinkeländerung des Fahrzeugs zu erkennen und daraufhin die Hinterachsbremskraft zu Gunsten der Seitenführung wieder zu verringern, um somit die Fahrzeugstabilität zu erhalten.

Mit dem beispielsgemäßen Betriebsverfahren für elektrische Parkbremsen während einer dynamischen Bremsung ist eine Unterstützung bzw. parallele Nutzung zu einer hydraulischen Bremsung während der Fahrt möglich auf Basis von Längsbeschleunigungsinformationen, ohne Nutzung von Raddrehzahlinformationen. Hierbei wird vorteilhafterweise die Fahrzeugstabilität erhalten durch geeignete Ermittlung der Hinterachs-Soll-Längsverzögerung bzw. Fahrzeug-Soll-Längsverzögerung und Regelung der Hinterachs-Bremsaktuatoren (elektrischen Parkbremsaktuatoren) auf Basis der Fahrzeuglängsbeschleunigung.

Die erfindungsgemäße Regelung auf Basis der Fahrzeuglängsverzögerung ermöglicht eine Bremswirkung der Hinterräder proportional zu den Vorderrädern.

## Patentansprüche

1. Verfahren zum Betrieb einer Bremsanlage eines Kraftfahrzeugs mit einer hydraulischen Betriebsbremsvorrichtung (10) mit hydraulisch betätigbaren Radbremsen (1, 2) an zumindest einer Vorderachse (VA) des Kraftfahrzeugs, und einer Parkbremsvorrichtung (20) mit jeweils durch einen elektromechanischen Aktuator betätigbaren Radbremsen (5, 6) an einer Hinterachse (HA) des Kraftfahrzeugs, wobei eine Kraftfahrzeug-Ist-Längsverzögerung (a_{Fzg,ist}) gemessen wird,
wobei während einer Bremsung mittels der hydraulischen Betriebsbremsvorrichtung (10) während einer Fahrt des Kraftfahrzeugs eine Bremsung mittels der Parkbremsvorrichtung (20) durchgeführt wird, wobei eine zu erreichende Kraftfahrzeug-Soll-Längsverzögerung (a_{Fzg,soll}) bestimmt wird , **dadurch gekennzeichnet, dass** die elektromechanischen Aktuatoren der Parkbremsvorrichtung (20) derart angesteuert werden, dass die Kraftfahrzeug-Ist-Längsverzögerung (a_{Fzg,ist}) auf die Kraftfahrzeug-Soll-Längsverzögerung (a_{Fzg,soll}) geregelt wird, und dass ein zeitlicher Verlauf oder eine zeitliche Änderung der Kraftfahrzeug-Ist-Längs¬verzögerung (aFzg,ist) und ein zeitlicher Verlauf oder eine zeitliche Änderung eines Radbremsdrucks (pVA) der hydraulisch betätigbaren Radbremsen (1, 2) überwacht werden, und dass anhand der Überwachung auf ein Blockieren zumindest eines der Räder geschlossen wird.

2. Verfahren nach Anspruch 1, **dadurch gekennzeichnet, dass** die Kraftfahrzeug-Soll-Längsverzögerung (a_{Fzg,soll}) anhand eines Bremsdrucks der Betriebsbremsvorrichtung (10), insbesondere anhand eines Radbremsdrucks (p_{VA}) der hydraulisch betätigbaren Radbremsen (1, 2) der Betriebsbremsvorrichtung (10), bestimmt wird.

3. Verfahren nach Anspruch 2, **dadurch gekennzeichnet, dass** die Kraftfahrzeug-Soll-Längsverzögerung (a_{Fzg,soll}) zusätzlich anhand einer gemessenen Querbeschleunigung des Kraftfahrzeugs (a_{Quer,ist}) bestimmt wird.

4. Verfahren nach einem der Ansprüche 1 bis 3, **dadurch gekennzeichnet, dass** die Kraftfahrzeug-Soll-Längsverzögerung (a_{Fzg},ₛₒₗₗ) aus einem ersten Kraftfahrzeug-Längsverzögerungsanteil (a_{VA}), insbesondere für die Vorderachse, und einem zweiten Kraftfahrzeug-Längsverzögerungsanteil (a_{HA}), insbesondere für die Hinterachse, berechnet wird.

5. Verfahren nach Anspruch 4, **dadurch gekennzeichnet, dass** der erste Kraftfahrzeug-Längsverzögerungsanteil (a_{VA}) aus einem Radbremsdruck (p_{VA}) der hydraulisch betätigbaren Radbremsen (1, 2) der Betriebsbremsvorrichtung (10) bestimmt wird.

6. Verfahren nach Anspruch 5, **dadurch gekennzeichnet, dass** der erste Kraftfahrzeug-Längsverzögerungsanteil (a_{VA}) anhand eines ersten vorgegebenen Zusammenhangs, insbesondere einer ersten Kennlinie, aus dem Radbremsdruck (p_{VA}) berechnet wird.

7. Verfahren nach einem der Ansprüche 3 bis 5, **dadurch gekennzeichnet, dass** der zweite Kraftfahrzeug-Längsverzögerungsanteil (a_{HA}) in Abhängigkeit einer gemessenen Querbeschleunigung des Kraftfahrzeugs (a_{Quer,ist}) bestimmt wird.

8. Verfahren nach einem der Ansprüche 4 bis 7, **dadurch gekennzeichnet, dass** der zweite Kraftfahrzeug-Längsverzögerungsanteil (a_{HA}) aus einem dritten Kraftfahrzeug-Längsverzögerungsanteil (a_{HAtheo}) und einem vorgegebenen oder vorbestimmten Sicherheits-Verzögerungswert (Δa), insbesondere durch Subtraktion, berechnet wird.

9. Verfahren nach Anspruch 8, **dadurch gekennzeichnet, dass** der dritte Kraftfahrzeug-Längsverzögerungsanteil (a_{HAtheo}) anhand eines zweiten vorgegebenen Zusammenhangs, insbesondere einer zweiten Kennlinie, aus dem ersten Kraftfahrzeug-Längsverzögerungsanteil (a_{VA}) berechnet wird.

10. Verfahren nach einem der Ansprüche 1 bis 9, **dadurch gekennzeichnet, dass** anhand einer Querbeschleunigung (a_{Quer,ist}) des Kraftfahrzeugs, einer Gierrate des Kraftfahrzeugs und einer Fahrzeuggeschwindigkeit (v) eine Schwimmwinkeländerung des Kraftfahrzeugs bestimmt wird, und dass, wenn die bestimmte Schwimmwinkeländerung einen Grenzwert übersteigt, eine Zuspannkraft an den elektromechanischen Aktuatoren der Parkbremsvorrichtung (20) verringert wird oder die Kraftfahrzeug-Soll-Längsverzögerung (a_{Fzg,soll}), insbesondere der zweite Kraftfahrzeug-Längsverzögerungsanteil (a_{HA}), verringert wird.

11. Bremsanlage für ein Kraftfahrzeug mit einer hydraulischen Betriebsbremsvorrichtung (10) mit hydraulisch betätigbaren Radbremsen (1, 2, 3, 4) an zumindest einer Vorderachse (VA), einer Parkbremsvorrichtung (20) mit jeweils durch einen elektromechanischen Aktuator betätigbaren Radbremsen (5, 6) an einer Hinterachse (HA), und einer elektronischen Steuer- und Regeleinheit (30), wobei die Bremsanlage eine Beschleunigungserfassungsvorrichtung (11), welche zumindest eine Längsverzögerung des Kraftfahrzeugs (a_{Fzg,ist}) erfasst, umfasst oder Meßdaten einer solchen Beschleunigungserfassungsvorrichtung erhält, **dadurch gekennzeichnet, dass** in der elektronischen Steuer- und Regeleinheit ein Verfahren nach einem der Ansprüche 1 bis 10 durchgeführt wird.

## Claims

1. Method for operating a brake system of a motor vehicle with a hydraulic service brake device (10) with hydraulically actuable wheel brakes (1, 2) on at least a front axle (VA) of the motor vehicle, and with a parking brake device (20) with wheel brakes (5, 6) which can be actuated in each case by way of an electromechanical actuator on a rear axle (HA) of the motor vehicle, a motor-vehicle actual longitudinal retardation (a_{Fzg,ist}) being measured, a braking operation being carried out by means of the parking brake device (20) during a braking operation by means of the hydraulic service brake device (10) during driving of a motor vehicle, a motor-vehicle setpoint longitudinal retardation (a_{Fzg,soll}) which is to be achieved being determined, **characterized in that** the electromechanical actuators of the parking brake device (20) are actuated in such a way that the motor-vehicle actual longitudinal retardation (a_{Fzg},ᵢₛₜ) is regulated to the motor-vehicle setpoint longitudinal retardation (a_{Fzg,soll}), and **in that** a temporal course or a temporal change of the motor-vehicle actual longitudinal retardation (a_{Fzg},ᵢₛₜ) and a temporal course or a temporal change of a wheel brake pressure (p_{VA}) of the hydraulically actuable wheel brakes (1, 2) are monitored, and **in that** locking of at least one of the wheels is extrapolated on the basis of the monitoring.

2. Method according to Claim 1, **characterized in that** the motor-vehicle setpoint longitudinal retardation (a_{Fzg},ₛₒₗₗ) is determined on the basis of a brake pressure of the service brake device (10), in particular on the basis of a wheel brake pressure (p_{VA}) of the hydraulically actuable wheel brakes (1, 2) of the service brake device (10) .

3. Method according to Claim 2, **characterized in that** the motor-vehicle setpoint longitudinal retardation (a_{Fzg},ₛₒₗₗ) is additionally determined on the basis of a measured lateral acceleration of the motor vehicle (a_{Quer,ist}) .

4. Method according to one of Claims 1 to 3, **characterized in that** the motor-vehicle setpoint longitudinal retardation (a_{Fzg,soll}) is calculated from a first motor-vehicle longitudinal retardation component (a_{VA}), in particular for the front axle, and a second motor-vehicle longitudinal retardation component (a_{HA}), in particular for the rear axle.

5. Method according to Claim 4, **characterized in that** the first motor-vehicle longitudinal retardation component (a_{VA}) is determined from a wheel brake pressure (p_{VA}) of the hydraulically actuable wheel brakes (1, 2) of the service brake device (10).

6. Method according to Claim 5, **characterized in that** the first motor-vehicle longitudinal retardation component (a_{VA}) is calculated from the wheel brake pressure (p_{VA}) on the basis of a first predefined interrelationship, in particular a first characteristic curve.

7. Method according to one of Claims 3 to 5, **characterized in that** the second motor-vehicle longitudinal retardation component (a_{HA}) is determined in a manner which is dependent on a measured lateral acceleration of the motor vehicle (a_{Quer,ist}).

8. Method according to one of Claims 4 to 7, **characterized in that** the second motor-vehicle longitudinal retardation component (a_{HA}) is calculated from a third motor-vehicle longitudinal retardation component (a_{HAtheo}) and a predefined or predetermined safety retardation value (Δa), in particular by way of subtraction.

9. Method according to Claim 8, **characterized in that** the third motor-vehicle longitudinal retardation component (a_{HAtheo}) is calculated from the first motor-vehicle longitudinal retardation component (a_{VA}) on the basis of a second predefined interrelationship, in particular a second characteristic curve.

10. Method according to one of Claims 1 to 9, **characterized in that** a slip angle change of the motor vehicle is determined on the basis of a lateral acceleration (a_{Quer,ist}) of the motor vehicle, a yaw rate of the motor vehicle and a vehicle speed (v), and **in that**, if the determined slip angle change exceeds a limit value, a brake application force is decreased at the electromechanical actuators of the parking brake device (20) or the motor-vehicle setpoint longitudinal retardation (a_{Fzg,soll}), in particular the second motor-vehicle longitudinal retardation component (a_{HA}), is decreased.

11. Brake system for a motor vehicle with a hydraulic service brake device (10) with hydraulically actuable wheel brakes (1, 2, 3, 4) on at least a front axle (VA), with a parking brake device (20) with wheel brakes (5, 6) which can be actuated in each case by way of an electromechanical actuator on a rear axle (HA), and with an electronic control and regulating unit (30), the brake system comprising an acceleration detection device (11) which detects at least a longitudinal retardation of the motor vehicle (a_{Fzg,ist}), or receives measured data from an acceleration detection device of this type, **characterized in that** a method according to one of Claims 1 to 10 is carried out in the electronic control and regulating unit.

## Revendications

1. Procédé permettant de faire fonctionner un système de freinage d'un véhicule automobile, comprenant un dispositif de frein de service hydraulique (10) doté de freins de roue à commande hydraulique (1, 2) sur au moins un essieu avant (VA) du véhicule automobile, et un dispositif de frein de stationnement (20) doté de freins de roue (5, 6) pouvant être actionnés respectivement par un actionneur électromécanique sur un essieu arrière (HA) du véhicule automobile, une décélération longitudinale réelle du véhicule automobile (a_{Fzg},ᵢₛₜ) étant mesurée, un freinage étant effectué au moyen du dispositif de frein de stationnement (20) pendant une action de freinage au moyen du dispositif de frein de service hydraulique (10) pendant un déplacement du véhicule automobile, une décélération longitudinale théorique du véhicule automobile (a_{Fzg,soll}) à atteindre étant déterminée,
**caractérisé en ce que** les actionneurs électromécaniques du dispositif de frein de stationnement (20) sont pilotés de telle sorte que la décélération longitudinale réelle du véhicule automobile (a_{Fzg},ᵢₛₜ) est réglée sur la décélération longitudinale théorique du véhicule automobile (a_{Fzg,soll}), et **en ce qu'**une évolution dans le temps ou une variation dans le temps de la décélération longitudinale réelle du véhicule automobile (a_{Fzg},ᵢₛₜ) et une évolution dans le temps ou une variation dans le temps d'une pression de frein de roue (p_{VA}) des freins de roue à commande hydraulique (1, 2) sont surveillées, et **en ce que** la surveillance permet de conclure à un blocage d'au moins l'une des roues.

2. Procédé selon la revendication 1, **caractérisé en ce que** la décélération longitudinale théorique du véhicule automobile (a_{Fzg},ₛₒₗₗ) est déterminée à l'aide d'une pression de freinage du dispositif de frein de service (10), en particulier à l'aide d'une pression de frein de roue (p_{VA}) des freins de roue à commande hydraulique (1, 2) du dispositif de frein de service (10) .

3. Procédé selon la revendication 2, **caractérisé en ce que** la décélération longitudinale théorique du véhicule automobile (a_{Fzg},ₛₒₗₗ) est déterminée en outre à l'aide d'une accélération transversale mesurée du véhicule automobile (a_{Quer,ist}).

4. Procédé selon l'une quelconque des revendications 1 à 3, **caractérisé en ce que** la décélération longitudinale théorique du véhicule automobile (a_{Fzg,soll}) est calculée à partir d'une première part de décélération longitudinale du véhicule automobile (a_{VA}), en particulier pour l'essieu avant, et d'une deuxième part de décélération longitudinale du véhicule automobile (a_{HA}), en particulier pour l'essieu arrière.

5. Procédé selon la revendication 4, **caractérisé en ce que** la première part de décélération longitudinale du véhicule automobile (a_{VA}) est déterminée à partir d'une pression de frein de roue (p_{VA}) des freins de roue à commande hydraulique (1, 2) du dispositif de frein de service (10).

6. Procédé selon la revendication 5, **caractérisé en ce que** la première part de décélération longitudinale du véhicule automobile (a_{VA}) est calculée à l'aide d'une première relation prédéfinie, en particulier d'une première courbe caractéristique, à partir de la pression de frein de roue (p_{VA}).

7. Procédé selon l'une quelconque des revendications 3 à 5, **caractérisé en ce que** la deuxième part de décélération longitudinale du véhicule automobile (a_{HA}) est déterminée en fonction d'une accélération transversale mesurée du véhicule automobile (a_{Quer,ist}).

8. Procédé selon l'une quelconque des revendications 4 à 7, **caractérisé en ce que** la deuxième part de décélération longitudinale du véhicule automobile (a_{HA}) est calculée à partir d'une troisième part de décélération longitudinale du véhicule automobile (a_{HAtheo}) et d'une valeur de décélération de sécurité prédéfinie ou prédéterminée (Δa), en particulier par soustraction.

9. Procédé selon la revendication 8, **caractérisé en ce que** la troisième part de décélération longitudinale du véhicule automobile (a_{HAtheo}) est calculée à l'aide d'une deuxième relation prédéfinie, en particulier d'une deuxième courbe caractéristique, à partir de la première part de décélération longitudinale du véhicule automobile (a_{VA}).

10. Procédé selon l'une quelconque des revendications 1 à 9, **caractérisé en ce qu'**à l'aide d'une accélération transversale (a_{Quer,ist}) du véhicule automobile, d'un taux de lacet du véhicule automobile et d'une vitesse de véhicule (v), une variation d'angle de dérapage du véhicule automobile est déterminée, et **en ce que**, si la variation d'angle de dérapage déterminée dépasse une valeur limite, une force de serrage de fermeture au niveau des actionneurs électromécaniques du dispositif de frein de stationnement (20) est diminuée ou la décélération longitudinale théorique du véhicule automobile (a_{Fzg,soll}), en particulier la deuxième part de décélération longitudinale du véhicule automobile (a_{HA}), est diminuée.

11. Système de freinage pour un véhicule automobile comprenant un dispositif de frein de service hydraulique (10) doté de freins de roue à commande hydraulique (1, 2, 3, 4) sur au moins un essieu avant (VA), un dispositif de frein de stationnement (20) doté de freins de roue (5, 6) pouvant être actionnés respectivement par un actionneur électromécanique sur un essieu arrière (HA), et une unité de commande et de régulation électronique (30), le système de freinage comprenant un dispositif de détection d'accélération (11) qui détecte au moins une décélération longitudinale du véhicule automobile (a_{Fzg,ist}), ou reçoit des données de mesure d'un tel dispositif de détection d'accélération,
**caractérisé en ce que** dans l'unité de commande et de régulation électronique, un procédé selon l'une quelconque des revendications 1 à 10 est exécuté.
